# EUROPÄISCHE PATENTSCHRIFT

(11) **EP 3 480 053 B1**
(45) Veröffentlichungstag und Bekanntmachung des Hinweises auf die Patenterteilung: **24.05.2023**
(21) Anmeldenummer: 18204953.6
(22) Anmeldetag: 07.11.2018
(51) Int. Cl.: B60L 53/35

(54) **MOBILER ENERGIESPEICHER UND LADEVORRICHTUNG**
MOBILE ENERGY STORAGE DEVICE AND CHARGING DEVICE
ACCUMULATEUR D'ÉNERGIE ET CHARGEUR MOBILE

(30) Priorität: 07.11.2017 DE 102017219730
(43) Veröffentlichungstag der Anmeldung: 08.05.2019
(73) Patentinhaber: Ford Global Technologies, LLC, Dearborn, MI 48126 (US)
(72) Erfinder: Sponheimer, Arnulf, 52072 Aachen (DE); Kees, Markus, 52072 Aachen (DE); Hobein, Bert, 52076 Aachen (DE)
(74) Vertreter: Dörfler, Thomas

(56) Entgegenhaltungen:
- EP-A2- 0 788 212
- DE-A1-102009 006 982
- DE-A1-102015 205 811
- DE-A1-102015 225 789
- US-A1- 2003 066 700
- US-A1- 2012 193 153
- US-A1- 2016 368 464
- US-A1- 2017 129 357

## Beschreibung

Die Erfindung betrifft einen mobilen Energiespeicher, der dafür eingerichtet ist, im öffentlichen Straßenverkehr autonom zu einem angeforderten Ort zu fahren und einem dort geparkten elektrisch angetriebenen Kraftfahrzeug während dessen Parkzeit Energie zuzuführen, und betrifft außerdem ein Verfahren zum Laden eines geparkten elektrisch angetriebenen Kraftfahrzeugs mittels eines mobilen Energiespeichers, gemäß den Oberbegriffen der unabhängigen Patentansprüche.

Elektrisch angetriebene Kraftfahrzeuge, worunter hier nicht nur rein batteriebetriebene Elektromobile, sondern auch alle Arten von Hybridelektrofahrzeugen mit zusätzlichem Verbrennungsmotor einschließlich Plug-in-Hybriden verstanden werden, benötigen eine entsprechende Lade-Infrastruktur. Doch droht die aus Emissionsschutzgründen angestrebte Verbreitung von Elektromobilität daran zu scheitern, dass nicht genügend Raum und finanzielle Mittel für eine ausreichende Zahl von Ladestationen zur Verfügung stehen, insbesondere nicht im öffentlichen Raum. Gerade in Städten mit ihrem dringenden Bedarf nach Emissionsminderung sind viele Fahrzeugbesitzer darauf angewiesen, ihr Fahrzeug auf öffentlichen Parkplätzen zu parken, oft am Straßenrand. Dort genügend Ladestationen für emissionsfreie oder emissionsarme Kraftfahrzeuge anzubieten, wird nicht so schnell gelingen.

So kamen im Jahr 2015 in Deutschland auf eine öffentliche Ladestation etwa 7 elektrisch angetriebene Kraftfahrzeuge, und es wird erwartet, dass dieses Missverhältnis mit zunehmender Zahl von elektrisch angetriebenen Kraftfahrzeugen noch zunimmt. Damit die wenigen öffentlichen Ladestationen nicht unnötig belegt werden, ist die erlaubte Parkzeit an öffentlichen Ladestationen begrenzt, weshalb ein längeres Parken und insbesondere über Nacht nicht ohne weiteres möglich oder unverhältnismäßig teuer ist. Diese Umstände halten besonders Straßenrand-Parker davon ab, sich ein elektrisch angetriebenes Kraftfahrzeug anzuschaffen.

Die DE 10 2015 225 789 A1 offenbart einen mobilen Energiespeicher. Der Energiespeicher kann auf Anforderung selbsttätig im öffentlichen Straßenverkehr von einer Ladestation zu einem Ort mit Energiebedarf fahren, z. B. zu einem Aufenthaltsort eines elektrisch angetriebenen Kraftfahrzeugs. Die Speichervorrichtung ist entweder ein Akkumulator, oder sie ist ein Tank für ein energietragendes Medium wie z. B. Wasserstoff oder Ethanol. Derartige selbstfahrende Energiespeicher, die einen Akkumulator enthalten, können die Akkumulatoren von geparkten elektrisch angetriebenen Kraftfahrzeugen laden, und derartige selbstfahrende Energiespeicher, die einen Wasserstoffspeicher enthalten, können geparkte mit Wasserstoff angetriebene Kraftfahrzeuge mit Wasserstoff betanken. Dies kann auch über Nacht geschehen. Diese mobilen Energiespeicher sind somit geeignet, die verschiedenen öffentlichen stationären Ladestationen für Strom und Wasserstoff zu ergänzen und die Verbreitung von emissionsfreien Kraftfahrzeugen zu fördern.

Die DE 10 2015 205 811 A1 offenbart einen mobilen Energiespeicher und ein Verfahren mit den Merkmalen der Oberbegriffe der unabhängigen Patentansprüche, nämlich einen sog. Range-Extender, der einem elektrisch betriebenen Hauptfahrzeug Energie aus einer Brennstoffzelle zuführen kann, wobei der Range-Extender automatische Fahrfunktionen und automatische Kopplungsfunktionen aufweist. Die Kopplung des Range-Extenders mit dem Hauptfahrzeug erfolgt in der Art eines Anhängers.

Die US 2012 / 0 193 153 A1 beschreibt ein semi-automones Fahrzeug, das zu Ladezwecken in der Art eines Anhängers an ein zu ladendes Elektrofahrzeug angekoppelt werden oder sich automatisch ankoppeln kann, wobei das semi-autonome Fahrzeug eine Brennstoffzelle aufweisen kann.

Die DE 10 2015 225 789 A1 beschreibt einen mobilen Energiespeicher, der entweder einen elektrischen Akkumulator oder aber einen Speichertank für ein energietragendes Medium, z.B. Wasserstoff oder Ethanol, aufweist, wobei das energietragende Medium nicht direkt im Energiespeicher in elektrische Energie umgewandelt wird. Der mobile Energiespeicher kann eine Antriebseinrichtung und/oder eine automatische Kupplungseinrichtung zum Ansteuern und/oder zur Ankupplung an ein nachzuladendes Fahrzeug aufweisen.

Die DE 10 2009 006 982 A1 beschreibt einen Laderoboter, der zu einem automatischen Andocken an ein Kraftfahrzeug ausgebildet ist, wobei der Laderoboter für den Ladevorgang mit einem stationären Energieversorgungsnetz, z.B. über eine Steckdose, verbunden ist.

Die US 2017/0129357 A1 und die EP 0 788 212 A2 zeigen jeweils ein kleines Straßenfahrzeug, das über ein Kabel mit einer fest installierten Ladestation für Elektrofahrzeuge verbunden ist und das dafür eingerichtet ist, von der Ladestation unter ein nahe an der Ladestation abgestelltes Kraftfahrzeug zu fahren und dieses über das Kabel mit dem elektrischen Strom zu laden.

Der Erfindung liegt die Aufgabe zu Grunde, den bekannten mobilen Energiespeicher so auszugestalten, dass insbesondere die allgemeine Elektromobilität noch mehr gefördert wird.

Diese Aufgabe wird durch einen mobilen Energiespeicher und ein Verfahren mit den Merkmalen der unabhängigen Patentansprüche gelöst.

Vorteilhafte Weiterbildungen der Erfindung sind in den abhängigen Patentansprüchen angegeben.

Gemäß der Erfindung enthält der als ein Roboterfahrzeug ausgebildete Energiespeicher nicht nur eine Speichervorrichtung für Wasserstoff, sondern auch eine Brennstoffzelle, und ist dafür eingerichtet, das geparkte Kraftfahrzeug mit von der Brennstoffzelle aus dem gespeicherten Wasserstoff erzeugtem elektrischem Strom zu laden.

Das heißt, der Akkumulator des geparkten Kraftfahrzeugs wird mit elektrischem Strom geladen, der von einer in dem mobilen Energiespeicher eingebauten Brennstoffzelle aus Wasserstoff erzeugt wird, der von dem mobilen Energiespeicher mitgeführt wird.

Die Energiedichte von Wasserstoffspeichern ist um ein Vielfaches höher als jene von Akkumulatoren. Daher kann ein mobiler Energiespeicher gemäß der Erfindung bei gleichem Energiespeichervermögen wesentlich kompakter gebaut sein als der bekannte mobile Energiespeicher mit Akkumulator, auch wenn er zusätzlich eine Brennstoffzelle enthält, wobei unter einer Brennstoffzelle das ganze entsprechende System verstanden wird, insbesondere ein Wasserstoff-Sauerstoff-Brennstoffzellen-System.

Auf diese Weise lässt sich ein kompakter mobiler Energiespeicher realisieren, der auch nahe an einem elektrisch angetriebenen Kraftfahrzeug Platz findet, das am Straßenrand oder auf einer anderen beengten Parkfläche geparkt ist. Außerdem kann ein derartiger mobiler Energiespeicher trotz seiner Kompaktheit mehrere Kraftfahrzeuge nacheinander laden, ohne zwischenzeitlich zu einer Ladestation für Wasserstoff zurückkehren zu müssen.

Diese Vorteile bestehen zwar auch bei dem bekannten mobilen Energiespeicher, soweit dieser einen Wasserstoffspeicher enthält, aus dem er Wasserstoff-Fahrzeuge betanken kann, doch ist es sehr schwierig und aufwändig, ihn mit der für den Umgang mit Wasserstoff erforderlichen Präzision und Fehlerfreiheit automatisch mit dem zu betankenden Kraftfahrzeug zu koppeln.

Hingegen lässt sich eine elektrische Kopplung zwischen Energiespeicher und zu betankendem Kraftfahrzeug sehr viel einfacher und sicherer automatisch herstellen.

Außerdem stoßen elektrisch angetriebene Kraftfahrzeuge mit Akkumulatoren eher auf Akzeptanz beim Publikum als Wasserstoff-Fahrzeuge, so dass die Verbreitung von emissionsfreien Kraftfahrzeugen mit der Erfindung gefördert wird, weil sie es ermöglicht, ein elektrisch angetriebenes Kraftfahrzeug einfach irgendwo am Straßenrand oder dergleichen zu parken und dort automatisch laden zu lassen.

Aufgrund der hohen Energiedichte von Wasserstoffspeichern genügt eine sehr viel geringere Anzahl von mobilen Energiespeichern als wenn diese mit Akkumulatoren ausgestattet wären. Außerdem ist der Energieumwandlungswirkungsgrad von Brennstoffzelle/Wasserstoff-Stromspeichersystemen im Allgemeinen besser als jener von Generator/Akkumulator-Stromspeichersystemen.

Erfindungsgemäß umfasst der mobile Energiespeicher ein wesentlich kleineres und über ein Kabel mit diesem verbundenes Straßenfahrzeug und ist eingerichtet, dieses mit sich zu führen, wobei das Straßenfahrzeug dafür eingerichtet ist, von dem nahe an dem Kraftfahrzeug abgestellten Energiespeicher selbsttätig zu dem Kraftfahrzeug zu fahren und dieses über das Kabel mit dem elektrischen Strom zu laden.

Dabei kann der mobile Energiespeicher das kleine kabelgebundene Straßenfahrzeug z. B. auf einer absenkbaren Plattform am Boden des mobilen Energiespeichers mit sich führen.

Das kleine kabelgebundene Straßenfahrzeug kann so flach sein, dass es unter das geparkte Kraftfahrzeug fahren kann, und es kann eine Induktionsladefläche und/oder einen CCS-Ladeverbinder sowie eine Einrichtung zum Anheben der Induktionsladefläche und/oder des CCS-Ladeverbinders in Richtung auf das Kraftfahrzeug aufweisen.

Eine flache Bauweise bei gleichzeitiger Omnidirektionalität des kabelgebundenen Straßenfahrzeugs, ohne dafür eine klassische Lenkung zu benötigen, wird vorteilhaft mittels einzeln angetriebener Mecanum-Laufräder und/oder Raupenketten zum besseren Überfahren von Bordsteinkanten erzielt.

Der mobile Energiespeicher ist vorzugsweise ungefähr halb so lang und halb so breit und mindestens ebenso hoch wie ein typischer Mittelklasse-PKW und kann mit derartigen Abmessungen mindestens ca. 60 kg Wasserstoff transportieren.

Aufgrund der hohen Energiedichte von Wasserstoffspeichern genügt eine sehr viel geringere Anzahl von mobilen Energiespeichern als wenn diese mit Akkumulatoren ausgestattet wären. Außerdem ist der Energieumwandlungswirkungsgrad von Brennstoffzelle/Wasserstoff-Stromspeichersystemen im Allgemeinen besser als jener von Generator/Akkumulator-Stromspeichersystemen.

Erfindungsgemäß führt der mobile Energiespeicher ein wesentlich kleineres und über ein Kabel damit verbundenes Straßenfahrzeug mit sich, das dafür eingerichtet ist, von dem nahe an dem Kraftfahrzeug abgestellten Energiespeicher selbsttätig zu dem Kraftfahrzeug zu fahren und dieses über das Kabel mit dem elektrischen Strom zu laden.

Dabei kann der mobile Energiespeicher das kleine kabelgebundene Straßenfahrzeug z. B. auf einer absenkbaren Plattform am Boden des mobilen Energiespeichers mit sich führen.

Das kleine kabelgebundene Straßenfahrzeug kann so flach sein, dass es unter das geparkte Kraftfahrzeug fahren kann, und es kann eine Induktionsladefläche und/oder einen CCS-Ladeverbinder sowie eine Einrichtung zum Anheben der Induktionsladefläche und/oder des CCS-Ladeverbinders in Richtung auf das Kraftfahrzeug aufweisen.

Eine flache Bauweise bei gleichzeitiger Omnidirektionalität des kabelgebundenen Straßenfahrzeugs, ohne dafür eine klassische Lenkung zu benötigen, wird vorteilhaft mittels einzeln angetriebener Mecanum-Laufräder und/oder Raupenketten zum besseren Überfahren von Bordsteinkanten erzielt.

Der mobile Energiespeicher ist vorzugsweise ungefähr halb so lang und halb so breit und mindestens ebenso hoch wie ein typischer Mittelklasse-PKW und kann mit derartigen Abmessungen mindestens ca. 60 kg Wasserstoff transportieren.

Die Speichervorrichtung für Wasserstoff kann einen oder mehrere Druckwasserstoffspeichertanks, Flüssigwasserstoffspeichertanks, Metallhydrid-Wasserstoffspeichertanks und/oder LOHC-Tanks aufweisen.

Es folgt eine Beschreibung von Ausführungsbeispielen anhand der Zeichnungen. Darin zeigen:
- Fig. 1: einen Zyklus des Ladens eines Kraftfahrzeugs mittels eines Lade-Roboters bis zu einem Wiederbetanken des Lade-Roboters;
- Fig. 2: schematische Schnittansichten des Lade-Roboters in verschiedenen Betriebsphasen;
- Fig. 3: einige mögliche Relativpositionen zwischen Kraftfahrzeug und Lade-Roboter beim Laden;
- Fig. 4: einen Lade-Roboter in Längs- und Querschnitten; und
- Fig. 5: schematische Schnittansichten und Draufsichten des Kraftfahrzeugs und von dessen Ladeschnittstellen.

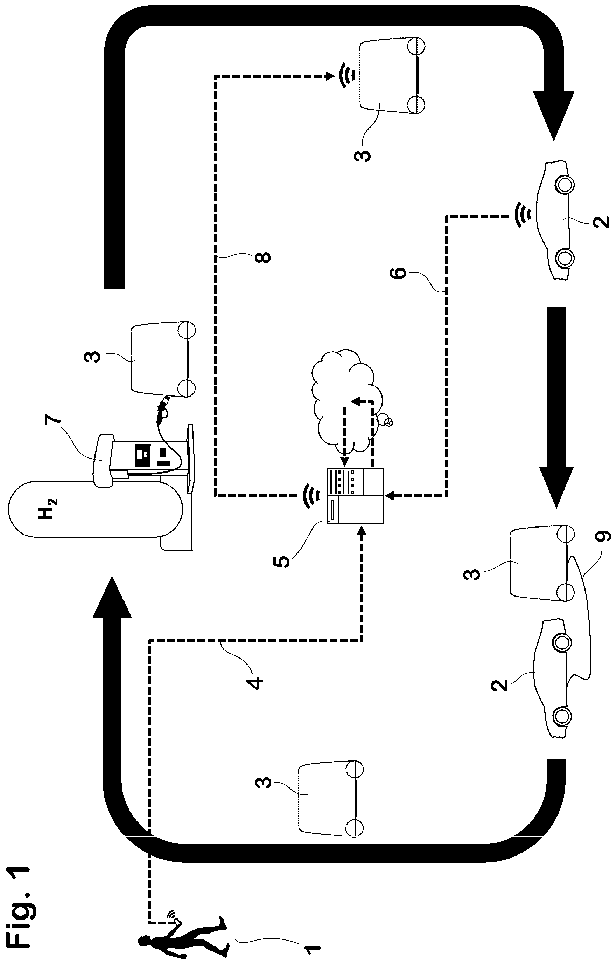

Unter Bezugnahme auf Fig. 1 kann ein Besitzer 1 eines elektrisch angetriebenen Kraftfahrzeugs 2, das an einem über öffentliche Straßen erreichbaren Ort geparkt ist, ein elektrisches Laden des Fahrzeugs 2 mittels eines autonom fahrenden Lade-Roboters 3 anfordern, indem er z. B. eine von einem Betreiber der Lade-Roboter 3 bereitgestellte App auf sein Smartphone lädt und mittels der App angibt, wann er voraussichtlich wieder abfahren möchte und wie viel Strom geladen werden soll, z. B. voll oder halb voll.

Das Smartphone sendet diese Informationen über eine Mobilfunkverbindung 4 an eine Steuerzentrale 5, welche das Fahrzeug 2 mittels einer Mobilfunkverbindung 6 und im Fahrzeug 2 eingebautem GPS ortet. Die Steuerzentrale 4 kann auch den Ladezustand und den Typ des Akkumulators des Fahrzeugs 2 prüfen, und ob Laden möglich ist. Das Fahrzeug 2 kann prüfen, ob darunter genügend Platz für den weiter unten beschriebenen Lade-Roboter ist, und es kann seine Position und den Ladezustand auch selbst prüfen und die selbst ermittelten Daten an die Steuerzentrale 4 senden.

Die Steuerzentrale 4 verarbeitet die Ladeanforderung unter Verwendung einer Cloud und von intelligenten Verteilungs- und Ablaufplanungsalgorithmen, um eine Trajektorie, welcher der Lade-Roboter 3 folgen soll, sowie eine Reihenfolge von Lade-Diensten zu berechnen, die sich nach dem Zeitrang der Lade-Anforderungen richten kann.

Der Lade-Roboter 3 ist ein Radfahrzeug mit der Fähigkeit, autonom im öffentlichen Straßenverkehr zu fahren, und befördert Wasserstoff, der gasförmig und/oder in verflüssigter Form oder in einem Speichermedium wie z. B. einem flüssigen organischen Wasserstoffträger (LOHC) durch chemische Reaktion umkehrbar gespeichert ist. Der Lade-Roboter 3 kann an einer Wasserstoff-Tankstelle 7, an der er auch stationiert sein kann, von Service-Personal oder automatisch betankt werden. Alternativ kann der/die Lade-Roboter auch von einer dezentral gelegenen Wasserstofftankstelle mit einem Transportfahrzeug /Transportauflieger zu einem innerstädtisch gelegenen Sammelpunkt (,HUB') gebracht und dort für den nächsten Einsatz abgestellt werden. Nach Beendigung der Ladeschicht fährt der/die Laderoboter wieder zu dem Sammelpunkt und wird von dort zur Betankung wieder mit dem Transportfahrzeug zur dezentralen Wasserstofftankstelle gebracht.

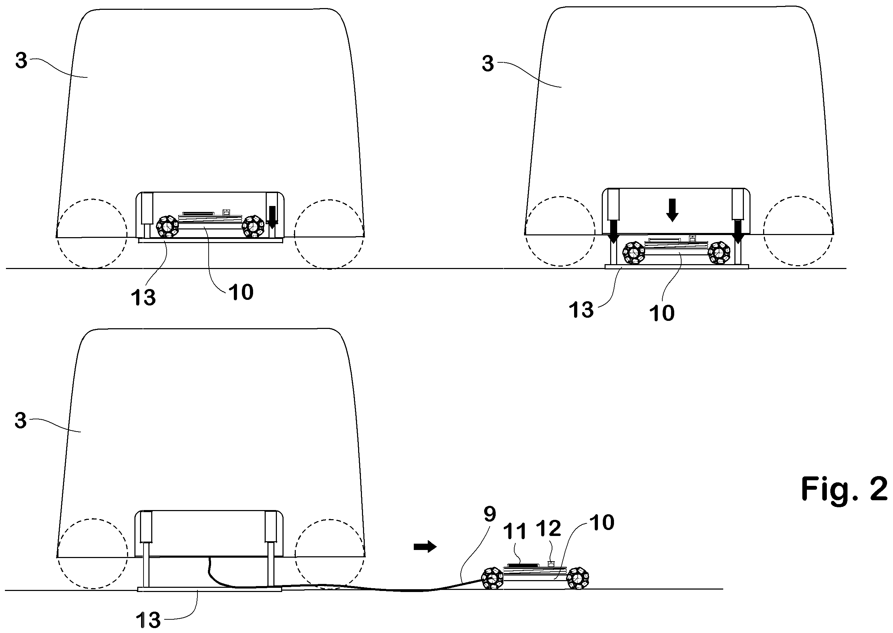

Dem Lade-Roboter 3 wird über eine Mobilfunkverbindung 8 befohlen, zu dem zu ladenden Fahrzeug 2 zu fahren. Sobald er dieses erreicht hat, geht der Lade-Roboter 3 per Fahrzeug-Fahrzeug-Kommunikation in einen sog. Handshake-Betrieb mit dem Fahrzeug 2, positioniert sich in dessen Nähe und gibt ein kleines kabelgebundenes Straßenfahrzeug frei, nachfolgend Drohne 10 (Fig. 2) genannt. Die Drohne 10 ist weniger hoch als die Bodenfreiheit von üblichen PKW beträgt, z. B. weniger als ca. 20 cm hoch. Dadurch kann die Drohne 10 unter das Fahrzeug 2 fahren, wobei sie das Kabel 9 hinter sich her zieht. Diese Vorgänge können unter Verwendung von Umfeldsensoren am Fahrzeug 2 und am Lade-Roboter 3 automatisch durchgeführt werden.

Die Drohne 10 fährt an eine Stelle unter dem Fahrzeug 2, wo eine Induktionsladefläche und/oder ein genormter elektromechanischer Ladeverbinder z. B. nach dem CCS-Standard im Boden des Fahrzeugs 2 eingebaut ist. Dort stellt die Drohne 10 selbsttätig eine entsprechende Stromverbindung her und lädt den Akkumulator des Fahrzeugs 2 über das Kabel 9 und die Stromverbindung.

Je nachdem, ob das Fahrzeug 2 über eine Induktionsladefläche oder einen elektromechanischen Ladeverbinder verfügt oder welche der beiden Schnittstellen schnelleres Laden ermöglicht, kann Gleichstrom-Schnellladen, Level2 Drehstromladen, oder induktives Laden, sofern fahrzeugseitig eine entsprechende Ladeeinrichtung besteht, über einen nicht gezeigten Gleichstrom-Wechselstrom-Wandler an Bord der Drohne 10 durchgeführt werden.

Fig. 2 zeigt den Lade-Roboter 3 und die Drohne 10 in den verschiedenen vorgenannten Betriebsphasen. Die Drohne 10 steht normalerweise auf einer absenkbaren Plattform 13 am Boden des Lade-Roboters 3. Am Ort des zu ladenden Fahrzeugs 2 wird die Plattform 13 bis auf Straßenniveau abgesenkt, und die Drohne 10 fährt von der Plattform 13 herunter und so unter das Fahrzeug 2, dass eine Induktionsladefläche 11 oder ein CCS-Ladeverbinder 12 an der Drohne 10 mit seinem entsprechenden Gegenstück am Fahrzeug 2 zusammenarbeiten kann. Die Drohne 10 und das Fahrzeug 2 verfügen über Sensorsysteme, die z. B. induktiv oder per Infrarot oder Ultraschall arbeiten, um sich gegenseitig detektieren zu können, damit sich die Drohne 10 auf das Fahrzeug 2 ausrichten kann.

Die Drohne 10 ist mit sog. Mecanum-Rädern ausgestattet, die jeweils von einem kleinen Elektromotor angetrieben werden und mit denen die Drohne 10 omnidirektionale Fahrmanöver durchführen kann, ohne eine mechanische Lenkung zu benötigen. Derartige Räder sind z. B. in der DE 2 354 404 A1 beschrieben.

Die Drohne 10 bezieht ihre Antriebsenergie aus der über das Kabel 9 zugeführten Ladespannung, indem sie deren Hochvolt-Spannung in Niedervolt-Gleichspannung umwandelt. Nachdem die Drohne 10 die richtige Position unter dem Fahrzeug 2 gefunden hat, hebt sie die Baugruppe aus Induktionsladefläche 11 und CCS-Ladeverbinder 12 an und stellt so die Verbindung mit der Induktionsladefläche oder dem CCS-Ladeverbinder am Fahrzeugboden her, je nachdem, welche dieser beiden Schnittstellen am Fahrzeug 2 vorhanden oder besser geeignet ist.

Danach beginnt das Brennstoffzellen-System im Lade-Roboter 3, elektrischen Strom zu erzeugen, mit dem der Hochvolt-Akkumulator des Fahrzeugs 2 über einen Gleichspannungswandler im Lade-Roboter 3 geladen wird. Die Umwandlung der im Wasserstoff gespeicherten Energie in elektrischen Strom und später zurück erzeugt keine anderen Emissionen als unschädlichen Wasserdampf, weshalb der hier beschriebene mobile Energiespeicher bzw. Lade-Roboter 3 und das beschriebene Verfahren besonders für Städte geeignet sind, die emissionsfreien Verkehr fordern.

Wenn das Laden beendet ist, trennt die Drohne 10 die Verbindung, fährt zum Lade-Roboter 3 zurück und wird wieder in den Lade-Roboter 3 gehoben, welcher dann zum nächsten zu ladenden Fahrzeug oder ggf. zurück zu der Wasserstoff-Tankstelle 7 fährt.

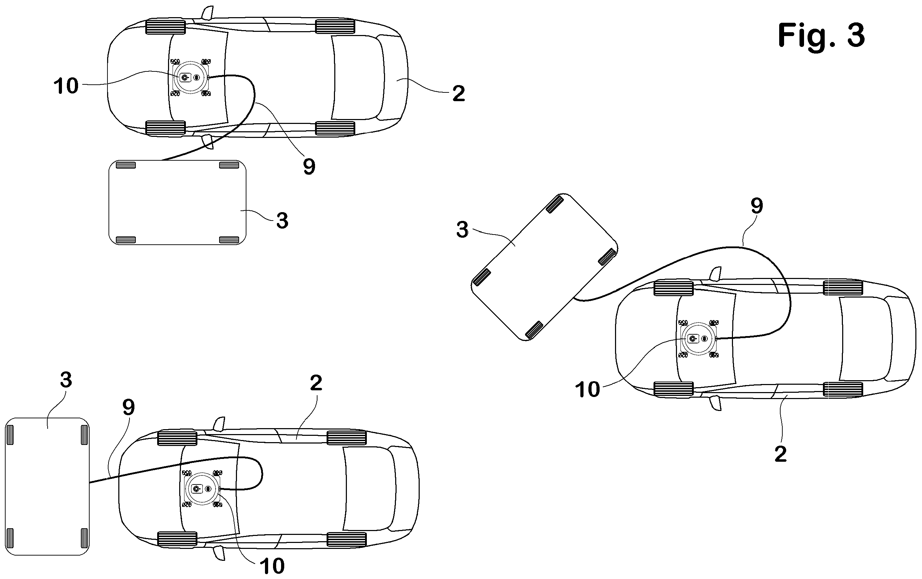

Der Lade-Roboter 3 kann z. B. je nach Menge des mitgeführten Wasserstoffs von etwa halb so lang bis etwa die Länge mit etwa der halben Breite eines Mittelklassen-PKW's und ebenso hoch oder höher sein. Mit derartigen Abmessungen wird der Lade-Roboter 3 in der Regel irgendeine Position vor, neben oder hinter dem Fahrzeug 2 finden, in der er genügend lange stehen bleiben kann, ohne anderen Verkehr wesentlich zu behindern. Einige mögliche Relativpositionen zwischen Fahrzeug 2 und Lade-Roboter 3 beim Laden sind in Fig. 3 gezeigt. Dabei kann das Fahrzeug 2 selbst z. B. längs, schräg oder quer zu einer Fahrbahn geparkt sein.

Berechnungen haben gezeigt, dass ein Lade-Roboter 3 mit den vorgenannten Abmessungen groß genug ist, um eine Menge Wasserstoff zu speichern und zu transportieren, die ausreicht, um ca. 10 Batteriefahrzeuge mit einer 100 kWh Batterie oder 33 Batteriefahrzeuge mit einer 30 kWh Batterie oder 100 Plugin-Hybridfahrzeuge mit einer 10 kWh Plugin-Batterie zu laden, oder entsprechend mehr Fahrzeuge, wenn nicht alle vollständig geladen werden müssen. Der Lade-Roboter 3 sollte Schnellladen ermöglichen, was typischerweise maximal ca. 1 Stunde dauert, so dass der Lade-Roboter 3 ca. zehn Fahrzeuge z. B. über Nacht nacheinander vollständig laden kann und erst dann zu der Wasserstoff-Tankstelle 7 zurückkehren muss.

In einem typischen realen Szenario und unter Berücksichtigung auch der Fahrzeiten zwischen den zu ladenden Fahrzeugen lässt sich ferner zeigen, dass 50 derartige Lade-Roboter ausreichen würden, um etwa 2500 Elektrofahrzeuge bei einem Mix aus Batteriefahrzeugen mit sehr großem und mittlerem Batteriespeicher sowie Plugin-Hybridfahrzeugen an einem Tag in einer Stadt zu bedienen.

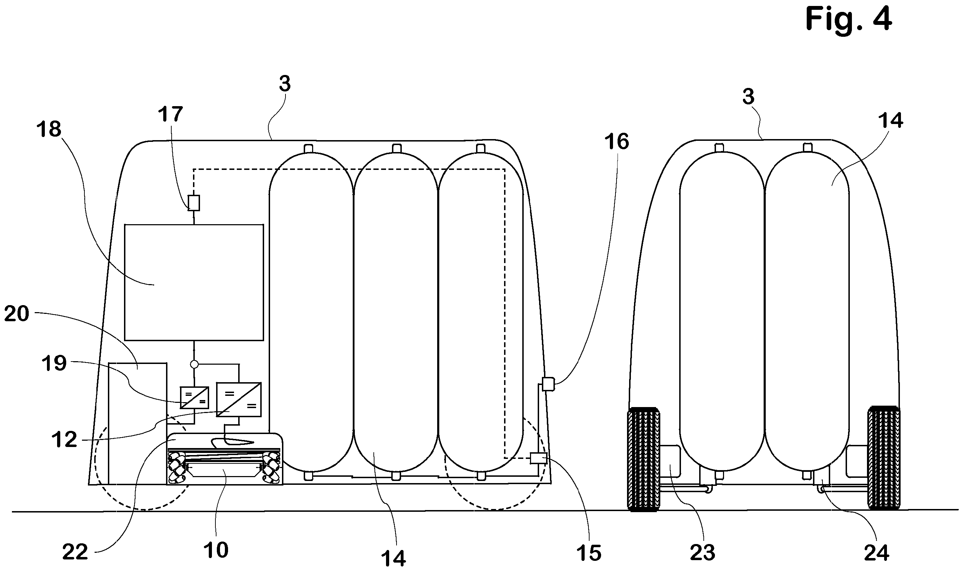

Fig. 4 zeigt ein Ausführungsbeispiel für einen Lade-Roboter 3 im Längsschnitt und im Querschnitt. In diesem Beispiel enthält der Lade-Roboter 3 sechs Standard-Druckwasserstoffspeichertanks 14 für zusammen ca. 60 kg Wasserstoff bei 700 bar, die über ein gemeinsames Druckregelventil 15 mit einer Betankungsöffnung 16 verbunden sind.

Von dem Druckregelventil 15 führt eine Druckleitung über ein Trennventil 17 zu einer Brennstoffzelle 18 (d. h., einem Brennstoffzellen-System), die unter Umwandlung von Wasserstoff und Sauerstoff in Wasser elektrischen Strom mit einer durch die Polarisationskurve der Brennstoffzelle gegebenen Spannung erzeugen kann.

Der elektrische Ausgang der Brennstoffzelle 18 ist über einen Akkumulator-Gleichstromwandler 19 elektrisch mit einem Hochvolt-Akkumulator 20 verbunden, der eine sekundäre Stromquelle für Spitzenlasten beim Laden des Fahrzeugs 2 bereitstellt. Die Brennstoffzelle 18 kann auch während der Fahrten des Lade-Roboters 3 von Einsatzort zu Einsatzort arbeiten und den Hochvolt-Akkumulator 20 aufladen.

Außerdem ist der elektrische Ausgang der Brennstoffzelle 18 als die primäre Ladestromquelle über einen Schnelllader-Gleichstromwandler 21 elektrisch mit der Drohne 10 verbunden. Die Drohne 10 ist in einem Drohnengehäuse 22 untergebracht.

Zwei oder alle vier Räder des Lade-Roboters 3 sind mittels Radnabenmotoren 23 einzeln angetrieben, und zwei oder alle vier Räder des Lade-Roboters 3 sind mittels Lenkmotoren 24 lenkbar.

Der Lade-Roboter 3 ist mit nicht gezeigten Sensorsystemen versehen, wie sie für autonomes Fahren benötigt werden und dafür an sich bekannt sind, z. B. Lidar, Radar, Videokameras, hochauflösendem GPS und odometrischen Sensoren für hochaufgelöste Messungen der Position des Lade-Roboters 3. Die Radnabenmotoren 23 und Lenkmotoren 24 des Lade-Roboters 3 können mit Niederspannung aus einem nicht gezeigten Niederspannungssystem gespeist werden, das über einen Spannungswandler aus dem Hochvolt-Akkumulator 20 gespeist wird und auch alle benötigten Sensoren und sonstige Elektronik mit Strom versorgt.

Anstelle der Druckwasserstoffspeichertanks 14 können auch andere bekannte Arten von Wasserstoff-Speichervorrichtungen verwendet werden.

So kann z. B. ein Flüssigwasserstoff-Speichersystem mit einem oder mehreren vakuumisolierten Tanks für bei niedrigen Temperaturen flüssigen Wasserstoff verwendet werden. Während der Entnahme bleibt die Temperatur in den Tanks konstant, während kontinuierlich Wasserstoff freigesetzt wird. In diesem Fall muss der Lade-Roboter 3 außerdem eine Verdampfungs- und Heizeinheit zum Erwärmen des freigesetzten Wasserstoffs enthalten.

Als eine weitere Alternative kann ein Metallhydrid-Wasserstoffspeichersystem verwendet werden, bei dem eine chemische Verbindung zwischen Wasserstoff und einem Metall bzw. einer Legierung eingegangen wird. Zum Beispiel speichert Magnesiumhydrid-Pulver, das in porösen Rohren zusammengepresst ist, Wasserstoff bei Umgebungstemperaturen und niedrigem Druck. In diesem Fall enthält der Lade-Roboter 3 möglicherweise noch eine elektrische Heizung und/oder einen Wärmetauscher zum schnelleren Freisetzen des gespeicherten Wasserstoffs.

Als noch eine Alternative kann Wasserstoffspeicherung in einem flüssigen organischen Wasserstoffträger (LOHC) verwendet werden. Dessen Tank oder Tanks enthalten eine Trennmembran, die unbenutzten LOHC von benutztem LOHC trennt. Als LOHC ist wegen seines Speichervermögens und seiner Nichtentzündlichkeit besonders Dibenzoltoluol geeignet. In diesem Fall muss der Lade-Roboter 3 auch verschiedene Komponenten des LOHC-Systems aufnehmen, insbesondere ein Reaktorsystem, ein Rückführungsventil, eine Brennstoffpumpe, ein elektrisches Heizgerät, ein Druckregelventil, ein Trennventil, eine Kühlmittelleitung von der Brennstoffzelle sowie eine Anlassöffnung für benutzten LOHC.

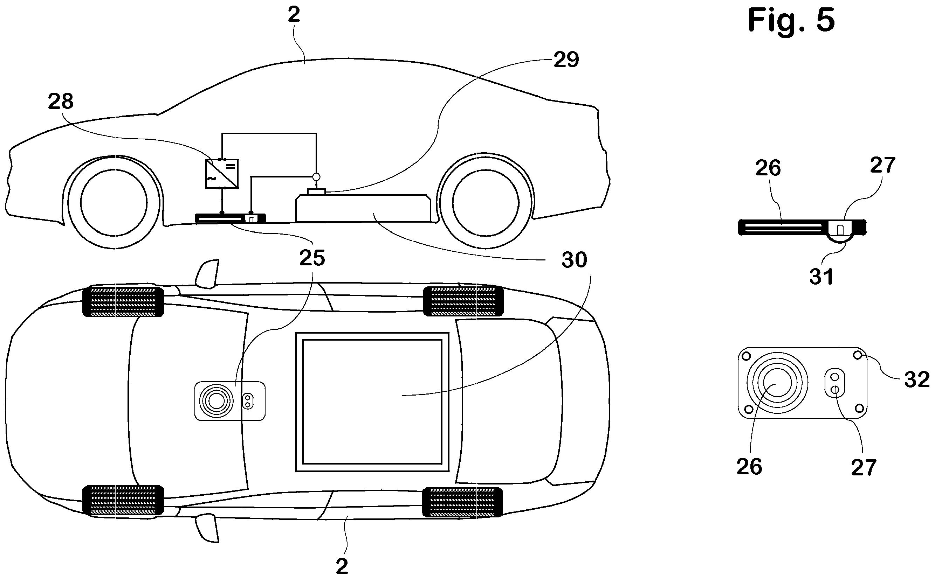

Wie oben erwähnt und in Fig. 5 veranschaulicht, besitzt das Fahrzeug 2 ein am Fahrzeugboden angeordnetes Ladeschnittstellensystem 25, das eine Induktionsladefläche 26 und/oder einen CCS-Ladeverbinder 27 aufweist, sowie ein standardisiertes Fahrzeug-Ladestation-Kommunikationssystem.

Die Induktionsladefläche 26 ist über einen Wechselstrom/Gleichstrom-Wandler 28 mit einem Akkumulator-Anschluss und -Managementsystem 29 eines Hochvolt-Akkumulators 30 des Fahrzeugs 2 verbunden. Der CCS-Ladeverbinder 27 ist direkt mit dem Anschluss 29 des Hochvolt-Akkumulators 30 verbunden. Eine Schutzkappe 32 am CCS-Ladeverbinder 27 wird von dem CCS-Ladeverbinder 12 an der Drohne 10 geöffnet, wenn dessen Ladeschnittstellen-Baugruppe angehoben wird. Ebenso wie an der Drohne 10 befinden sich auch am Ladeschnittstellensystem 25 Positionssensoren 32 und/oder Aktuatoren, mit deren Hilfe sich die Drohne 10 richtig unter dem Fahrzeug 2 positionieren und damit verbinden kann.

Der hier beschriebene mobile Energiespeicher bzw. Lade-Roboter 3 und das beschriebene Verfahren machen die tägliche Suche von Besitzern von elektrisch angetriebenen Kraftfahrzeugen nach einer freien Ladestation obsolet. Sie können Ihr Fahrzeug laden lassen, wenn es ihnen zeitlich passt, und müssen auch nicht umparken, wenn das Laden beendet ist.

Außerdem kann die Zahl der nötigen öffentlichen Ladestationen drastisch reduziert werden, was hohe Investitionskosten für Lade-Infrastruktur einspart. Der mobile Energiespeicher bzw. Lade-Roboter 3 und das beschriebene Verfahren verringern auch den Verkehr, der mit dem Aufsuchen von festen Ladestationen verbunden ist, da der Lade-Roboter 3 wegen des Energieträgers Wasserstoff ein Vielfaches der Energie speichern kann, die er in entsprechend schweren und großen Akkumulatoren speichern könnte, so dass jeder Lade-Roboter 3 mehrere Kraftfahrzeuge laden kann und dabei eine optimierte Route nehmen kann, bevor er Wasserstoff nachtanken muss.

Ferner können Spitzenbelastungen des Stromnetzes reduziert werden, da das Laden zeitlich von der aktuellen Netzlast entkoppelt wird. Der Wasserstoff kann aus erneuerbaren Energien erzeugt werden, und zwar in Zeiten, in denen besonders viel Strom z. B. aus Windrädern und Solaranlagen anfällt. Eine hohe Anzahl von Lade-Robotern 3 bildet daher einen zeitlichen Puffer zwischen Stromerzeugung und Stromverbrauch.

Der Lade-Roboter 3 kann auch zum Schnellladen von elektrisch angetriebenen Fahrzeugen angefordert werden, die wegen zu geringer Ladung liegen geblieben sind, und er kann auch zum Betanken von mit Wasserstoff betriebenen Fahrzeugen verwendet werden, wenn entsprechende Anschlüsse vorhanden sind. Der Lade-Roboter 3 kann auch zur temporären Stromversorgung von Immobilien angefordert werden, z. B. bei Stromausfällen aufgrund von Bauarbeiten, oder z. B. zur temporären Stromversorgung von Baumaschinen.

## Patentansprüche

1. Mobiler Energiespeicher (3), der dafür eingerichtet ist, im öffentlichen Straßenverkehr autonom zu einem angeforderten Ort zu fahren und einem geparkten elektrisch angetriebenen Kraftfahrzeug (2) während dessen Parkzeit Energie zuzuführen, wobei der Energiespeicher (3) eine Speichervorrichtung für Wasserstoff sowie eine Brennstoffzelle (18) enthält und dafür eingerichtet ist, das geparkte Kraftfahrzeug (2) mit von der Brennstoffzelle (18) aus dem gespeicherten Wasserstoff erzeugtem elektrischem Strom zu laden,
**dadurch gekennzeichnet, dass**
der mobile Energiespeicher (3) ein wesentlich kleineres und über ein Kabel (9) mit diesem verbundenes Straßenfahrzeug (10) umfasst und eingerichtet ist, dieses mit sich zu führen, wobei das Straßenfahrzeug (10) dafür eingerichtet ist, von dem nahe an dem Kraftfahrzeug (2) abgestellten Energiespeicher (3) selbsttätig zu dem Kraftfahrzeug (2) zu fahren und dieses über das Kabel (9) mit dem elektrischem Strom zu laden.

2. Mobiler Energiespeicher (3) nach Anspruch 1,
**dadurch gekennzeichnet, dass**
der mobile Energiespeicher (3) das kleine kabelgebundene Straßenfahrzeug (10) auf einer absenkbaren Plattform (13) am Boden des mobilen Energiespeichers (3) mit sich führt.

3. Mobiler Energiespeicher (3) nach Anspruch 1 oder 2,
**dadurch gekennzeichnet, dass**
das kleine kabelgebundene Straßenfahrzeug (10) so flach ist, dass es unter das auf einer ebenen Fläche geparkte Kraftfahrzeug (2) fahren kann.

4. Mobiler Energiespeicher (3) nach einem der Ansprüche 1 bis 3,
**dadurch gekennzeichnet, dass**
das kleine kabelgebundene Straßenfahrzeug (10) eine Induktionsladefläche (11) und/oder einen CCS-Ladeverbinder (12) aufweist.

5. Mobiler Energiespeicher (3) nach einem der Ansprüche 1 bis 4,
**dadurch gekennzeichnet, dass**
das kleine kabelgebundene Straßenfahrzeug (10) vier einzeln angetriebene Mecanum-Laufräder und / oder Raupenketten aufweist.

6. Mobiler Energiespeicher (3) nach einem der Ansprüche 1 bis 5,
**dadurch gekennzeichnet, dass**
die Speichervorrichtung für Wasserstoff einen oder mehrere Druckwasserstoffspeichertanks (14), Flüssigwasserstoffspeichertanks, Metallhydrid-Wasserstoffspeichertanks und/oder LOHC-Tanks aufweist.

7. Verfahren zum Laden eines Akkumulators (30) eines geparkten elektrisch angetriebenen Kraftfahrzeugs (2) mittels eines mobilen Energiespeichers (3) nach einem der vorhergehenden Ansprüche.

8. Verfahren nach Anspruch 7,
**dadurch gekennzeichnet, dass**
das Fahrzeug (2) in einer Kontrollzentrale (5) in einer Datenbank geführt und automatisch dessen genaue Position zusammen mit entsprechendem Batterie-Status und weiteren Informationen vom Fahrzeug (2) automatisch ermittelt und an die Kontrollzentrale zurückgesendet wird.

## Claims

1. Mobile energy storage device (3) which is configured to travel autonomously to a requested location in public road traffic and to supply a parked electrically driven motor vehicle (2) with energy during the parking time of the latter, wherein the energy storage device (3) contains a storage device for hydrogen and a fuel cell (18) and is configured to charge the parked motor vehicle (2) with electric energy generated from the stored hydrogen by using the fuel cell (18),
**characterized in that**
the mobile energy storage device (3) comprises a road vehicle (10) that is substantially smaller and connected thereto via a cable (9) and is configured to carry the vehicle with it, wherein the road vehicle (10) is configured to move automatically to the motor vehicle (2) from the energy storage device (3) parked close to the motor vehicle (2) and to charge the motor vehicle with the electric energy via the cable (9).

2. Mobile energy storage device (3) according to Claim 1,
**characterized in that**
the mobile energy storage device (3) carries the small cable-connected road vehicle (10) with it on a lowerable platform (13) on the base of the mobile energy storage device (3).

3. Mobile energy storage device (3) according to Claim 1 or 2,
**characterized in that**
the small cable-connected road vehicle (10) is so flat that it is able to move under the motor vehicle (2) parked on a level surface.

4. Mobile energy storage device (3) according to one of Claims 1 to 3,
**characterized in that**
the small cable-connected road vehicle (10) has an induction charging area (11) and/or a CCS charging connector (12).

5. Mobile energy storage device (3) according to one of Claims 1 to 4,
**characterized in that**
the small cable-connected road vehicle (10) has four individually driven Mecanum running wheels and/or caterpillar tracks.

6. Mobile energy storage device (3) according to one of Claims 1 to 5,
**characterized in that**
the storage device for hydrogen has one or more pressurized hydrogen storage tanks (14), liquid hydrogen storage tanks, metal hydride hydrogen storage tanks and/or LOHC tanks.

7. Method for charging an accumulator (30) of a parked electrically driven motor vehicle (2) by means of a mobile energy storage device (3) according to one of the preceding claims.

8. Method according to Claim 7,
**characterized in that** the vehicle (2) is managed in a database in a central control station (5) and, automatically, its exact position together with corresponding battery status and further information is determined automatically by the vehicle (2) and sent back to the central control station.

## Revendications

1. Réservoir d'énergie mobile (3) qui est conçu pour rouler de manière autonome sur la voie publique jusqu'à un lieu demandé et pour alimenter en énergie un véhicule automobile électrique garé (2) pendant la durée de stationnement de celui-ci, dans lequel le réservoir d'énergie (3) comporte un dispositif de stockage d'hydrogène ainsi qu'une pile à combustible (18) et est conçu pour recharger le véhicule automobile garé (2) avec du courant électrique généré par la pile à combustible (18) à partir de l'hydrogène stocké,
**caractérisé en ce que** le réservoir d'énergie mobile (3) comprend un véhicule routier (10) nettement plus petit et relié à celui-ci par un câble (9), et est conçu pour embarquer celui-ci, dans lequel le véhicule routier (10) est conçu pour rouler automatiquement du réservoir d'énergie (3) en stationnement à proximité du véhicule automobile (2) jusqu'au véhicule automobile (2) et pour recharger celui-ci en courant électrique par l'intermédiaire du câble (9).

2. Réservoir d'énergie mobile (3) selon la revendication 1, **caractérisé en ce que** le réservoir d'énergie mobile (3) embarque le petit véhicule routier câblé (10) sur une plate-forme (13) pouvant être abaissée sur le plancher du réservoir d'énergie mobile (3) .

3. Réservoir d'énergie mobile (3) selon la revendication 1 ou 2, **caractérisé en ce que** le petit véhicule routier câblé (10) est si plat qu'il peut rouler sous le véhicule automobile (2) garé sur une surface plane.

4. Réservoir d'énergie mobile (3) selon l'une quelconque des revendications 1 à 3, **caractérisé en ce que** le petit véhicule routier câblé (10) présente une surface de charge par induction (11) et/ou un connecteur de charge CCS (12).

5. Réservoir d'énergie mobile (3) selon l'une quelconque des revendications 1 à 4, **caractérisé en ce que** le petit véhicule routier câblé (10) présente quatre roues mecanum entraînées individuellement et/ou des chenilles.

6. Réservoir d'énergie mobile (3) selon l'une quelconque des revendications 1 à 5, **caractérisé en ce que** le dispositif de stockage d'hydrogène présente une ou plusieurs bouteilles d'hydrogène sous pression (14), des bouteilles d'hydrogène liquide, des bouteilles d'hydrure métallique/hydrogène et/ou des réservoirs LOHC.

7. Procédé permettant de recharger un accumulateur (30) d'un véhicule automobile électrique garé (2) au moyen d'un réservoir d'énergie mobile (3) selon l'une quelconque des revendications précédentes.

8. Procédé selon la revendication 7, **caractérisé en ce que** le véhicule (2) est géré dans une base de données dans un centre de contrôle (5), et le véhicule (2) détermine automatiquement sa position exacte avec l'état de la batterie correspondant et d'autres informations et les renvoie automatiquement au centre de contrôle.
